# EUROPEAN PATENT APPLICATION

(11) **EP 1 564 646 A2**
(43) Date of publication of application: **17.08.2005**
(21) Application number: 05002815.8
(22) Date of filing: 10.02.2005
(51) Int. Cl.: G06F 15/78

(54) **Configurable embedded processor**

(30) Priority: 11.02.2004 US 777739
(71) Applicant: Infineon Technologies AG, 81669 München (DE)
(72) Inventor: Ober, Robert E., San Jose, CA 95126 (US); Oberländer, Klaus, 81679 München (DE)
(74) Representative: Repkow, Ines, Dr. Dipl.-Ing.

(57) **Abstract**

A microprocessor system includes a multi-bank memory having a first memory bank and a second memory bank, a muxing circuit, a CPU and a DMA controller. The muxing circuit allows the CPU to access one of the memory bank while allowing the DMA controller access to the other memory bank at the same time. Thus, the microprocessor system needs to process multiple data sets, the CPU can be processing a first data set in the first memory bank while the DMA controller is writing a second data set in the second memory bank. When the CPU is finished processing the first data set and the DMA controller is finished writing the second data set, the muxing circuit is reconfigured so that the CPU can process the second data set in the second memory bank and the DMA controller can write a third data set in the first memory bank.

## Description

### FIELD OF THE INVENTION

The present invention relates to microprocessor systems, and more particularly to a memory system for a microprocessor system to reduce memory contention between a CPU and a DMA controller.

### BACKGROUND OF THE INVENTION

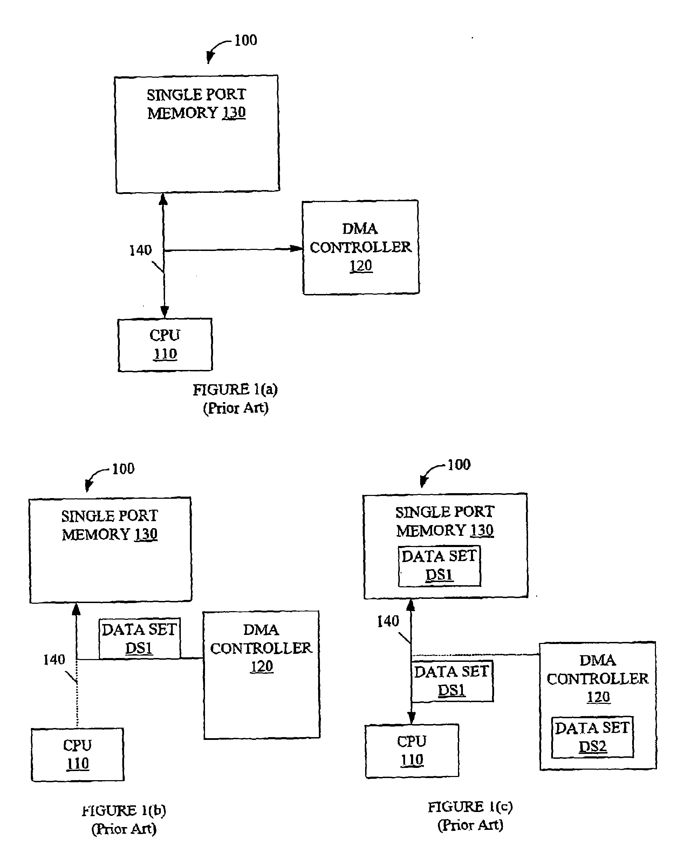

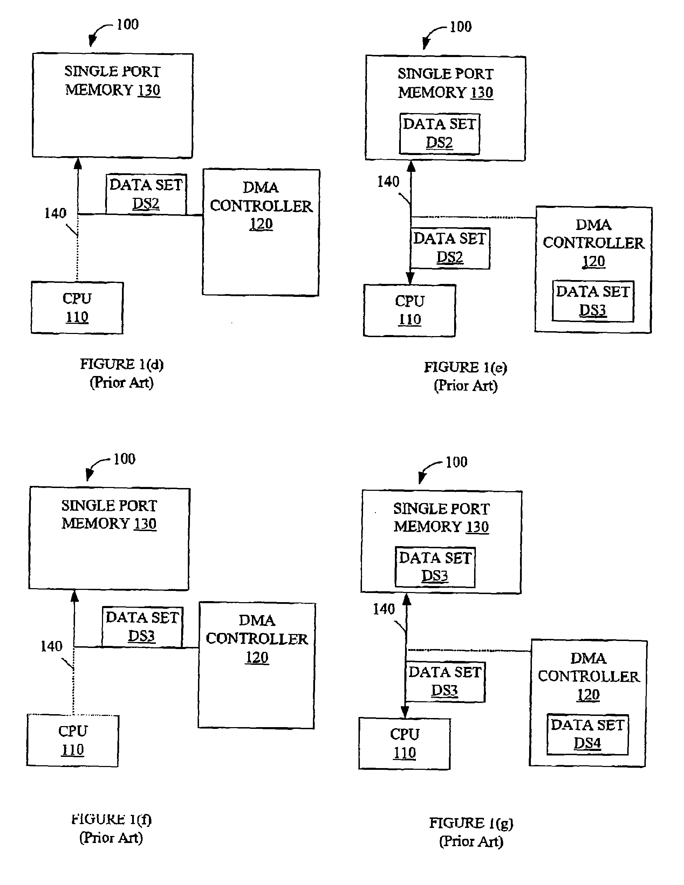

Fig. 1(a) illustrates a conventional microprocessor system 100 having a central processing unit (CPU) 110, a direct memory access (DMA) controller 120, a single port memory 130 and a memory bus 140. CPU 110 and DMA controller 120 are coupled to single port memory 130 by memory bus 140. In general both CPU 110 and DMA controller 120 are memory access devices that are considered bus master, while single port memory 130 is considered a slave device that is being shared by the bus masters.

In many situations, particularly for digital signal processing, DMA controller 120 must store a data set in single port memory 130 for CPU 110 to process. Ideally, DMA controller 120 would store a second data set for CPU 110 after writing the first data set. Figs. 1(b) to 1(g) illustrate the processing of three data sets DS1, DS2, and DS3 using conventional microprocessor system 100. As illustrated in Fig. 1(b) the process begins with DMA controller 120 writing data set DS1 into single port memory 130. Because DMA controller 120 is using memory bus 140, CPU 110 cannot access single port memory 130, this is illustrated by using a dashed line for the portion of memory bus 140 coupled to CPU 110. As illustrated in Fig. 1(c), after data set DS1 is written into single port memory 130, CPU 110 can process data set DS1. Processing of data set DS1, which resides in single port memory 130 by CPU 110 over bus 140 is symbolically illustrated by a copy of data set DS1 on bus 140. Because CPU 110 is using memory bus 140, DMA controller 120 must wait until after CPU 110 has finished processing data set DS1 before DMA controller 120 can write data set DS2 into single port memory 130. Thus, DMA controller 120 is stalled while CPU 110 is processing data set DS1. After CPU 110 has finished processing data set DS1, DMA controller 120 can write data set DS2 into single port memory 130 as illustrated in Fig. 1(d). While DMA controller is writing data set DS2 into single port memory 130, CPU controller can not access single port memory 130.

As illustrated in Fig. 1(e), after DMA controller 120 writes data set DS2 into single port memory 130, CPU 110 can process data set DS2. While, CPU 110 is processing data set DS2, DMA controller can not access single port memory 130 to store data set DS3. After CPU 110 has finished processing data set DS2, DMA controller 120 can write data set DS3 into single port memory 130 as illustrated in Fig. 1(f). While DMA controller is writing data set DS3 into single port memory 130, CPU controller can not access single port memory 130. As illustrated in Fig. 1(g), after DMA controller 130 writes data set DS2 into single port memory 130, CPU 110 can process data set DS3.

Because both DMA controller 120 and CPU 110 must access single port memory 130 through memory bus 140, DMA controller 120 must wait until after CPU 110 has processed a data set to write the next data set into single port memory 130. Thus DMA controller 120 is often stalled while waiting for CPU 110 to finish using single port memory 130. Similarly, while DMA controller is writing a data sent into single port memory 130, CPU 110 cannot access single port memory 130. Thus, CPU 110 is often stalled while waiting for DMA controller 120 to finish writing a data set into single port memory 130. Consequently, the processing power CPU 110 and data throughput of DMA controller 120 is often wasted.

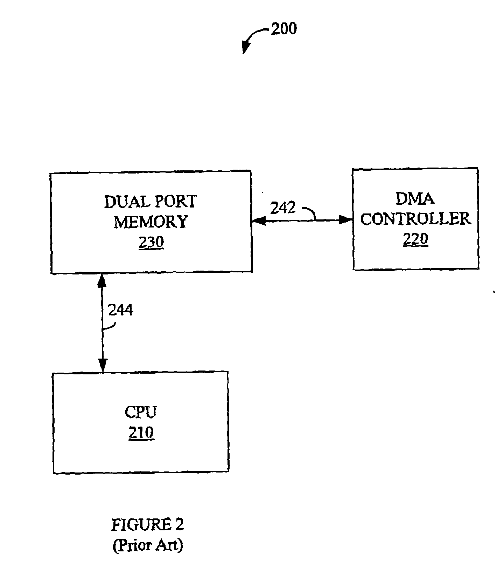

Fig. 2 shows a microprocessor system 200 that provides a conventional solution to the memory bottleneck of microprocessor system 100. In microprocessor system 200, single port memory 130 is replaced with a dual port memory 230. A DMA controller 120 is coupled to one port of dual port memory 230 by a DMA bus 242. A CPU 210 is coupled to a second port of dual port memory 230 through a CPU bus 244. While CPU 210 is processing a first data set through CPU bus 244, DMA controller 220 can be writing a second data set sent into dual port memory 230. Thus, CPU 210 can begin processing the second data set earlier as compared to CPU 110. Although microprocessor system 200 provides high utilization of both CPU 110 and DMA controller 120, the use of dual port memory 230 is very costly for a variety of reasons. For example, dual port memory 230 generally requires 50% more silicon area to implement than a single port memory of the same size. Furthermore, dual port memories have much higher power consumption and operate at lower frequencies than single port memories. In addition dual port memories have additional complexities such as port contention for the same memory addresses that must be resolved.

Hence there is a need for a method or system that provides efficient use of a CPU and a DMA controller without requiring high power utilization or large silicon area.

### SUMMARY

Accordingly, a microprocessor system in accordance with the present invention, uses multiple single port memory banks to allow efficient use of the CPU and the DMA controller as well as other bus masters. For example, in one embodiment of the present invention, as the CPU is processing a first data set in the first memory bank, the DMA controller can be writing a second data set into the second memory bank. Once the CPU is finished processing the first data set and the DMA controller has finished writing the second data set, the CPU can process the second data set in the second memory bank while the DMA controller writes a third data set into the first memory bank. By using the memory banks in parallel, the present invention provides higher utilization of the CPU and the DMA controller.

The present invention will be more fully understood in view of the following description and drawings.

### BRIEF DESCRIPTION OF THE DRAWINGS

Fig. 1(a) is simplified block diagram of a conventional microprocessor system.

Fig. 1(b)-1(g) illustrate the use of a conventional microprocessor system.

Fig. 2 is simplified block diagram of a conventional microprocessor system.

Fig. 3 is a simplified block diagram of a novel microprocessor system in accordance with one embodiment of the present invention.

Fig. 4 is a block diagram of a novel microprocessor system in accordance with one embodiment of the present invention.

Fig. 5(a)-5(d) illustrates the use of an embodiment of the present invention.

### DETAILED DESCRIPTION

As explained above, conventional microprocessor systems have low utilization of the CPU due to memory bottlenecks caused by sharing a single port memory with a DMA controller. While using a dual port memory provides higher utilization, the cost in silicon area and power for the dual port memory prevents wide spread use of dual port memories. The present invention provides a novel microprocessor system that provides the benefits of a dual port memory system without the detriments.

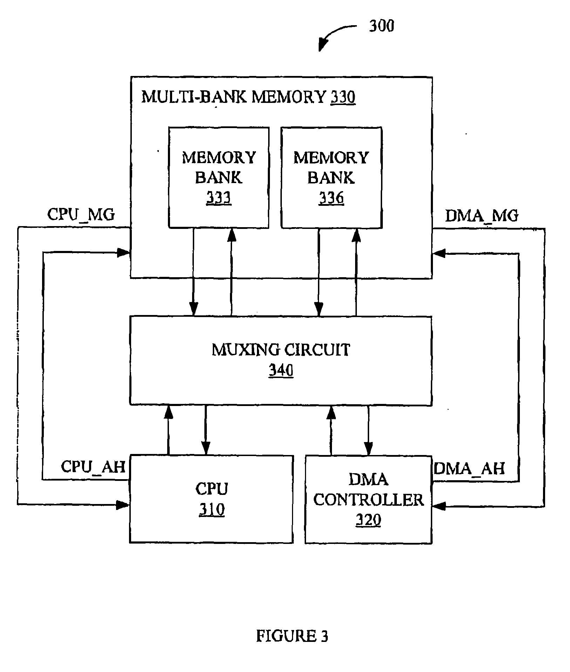

Fig. 3 is a simplified block diagram of a microprocessor system 300 in accordance with one embodiment of the present invention. Microprocessor system 300 includes a CPU 310, a DMA controller 320, a multi-bank memory 330 having a first memory bank 333 and a second memory bank 336, and a muxing circuit 340. Muxing circuit 340 couples CPU 310 and DMA controller 320 to memory banks 333 and 336. Muxing circuit 340 could be for example, a multiplexer or a crossbar switch. For clarity, the sample embodiments of the present invention described herein use two memory banks in multi-bank memory 330, however, the principles of the present invention are applicable to multi-bank memories having any number of memory banks. Similarly, the principles of the present invention can also be used with more bus masters, including other types of memory access devices, that share multi-bank memory 330 with CPU 310 and DMA controller 320. For example, in one embodiment of the present invention 3 bus masters shares a multi-bank memory having three memory banks.

When CPU 310 wants to use a memory bank (e.g. either memory bank 333 or memory bank 336), CPU 310 would make a request to use the memory bank. If the memory bank is free (i.e. not being used) then CPU 310 is granted use of the memory bank. However, if the memory bank is not free (i.e. the memory bank is being used by DMA controller 320), CPU 310 is not granted use of the memory bank and must wait until the memory bank is free. Similarly, when DMA controller 320 wants to use a memory bank DMA controller 320 would make a request to use the memory bank. If the memory bank is free (i.e. not being used) then DMA controller 320 is granted use of the memory bank. However, if the memory bank is not free (i.e. the memory bank is being used by CPU 310), DMA controller 320 is not granted use of the memory bank and must wait until the memory bank is free. In most embodiments of the present invention, if CPU 310 and DMA controller 320 makes simultaneous requests to use the same memory bank, DMA controller 320 is granted use of the memory bank. However, some embodiments of the present invention may grant use of the memory bank to CPU 310 when simultaneous requests are received. Still other embodiments may randomly grant use of the memory bank in when simultaneous requests are received.

various request and grant protocols can be used with the present invention. For example, the embodiment of Fig. 3 segregates memory bank 333 and memory bank 336 by address space. Thus, the bank requested by CPU 310 or DMA controller 320 can be determined by the high address bit from CPU 310 or DMA controller 320.Thus, as illustrated in Fig. 3, in one embodiment of the present invention, CPU 310 provides high address bit CPU_AH as a request signal to multi-bank memory 330. When high address bit CPU_AH is in a first logic state (i.e. logic low) CPU 310 is requesting use of first memory bank 333. When high address bit CPU_AH is in a second logic state, CPU 310 is requesting use of second memory bank 336. If the requested bank is available, multi-bank memory 330 drives a CPU memory grant signal CPU_MG to CPU 310 to a specified granted logic state (i.e. logic high) otherwise multi-bank memory 330 drives CPU memory grant signal to a denied logic state (i.e. logic low). Similarly, DMA controller 320 provides high address bit DMA_AH as a request signal to multi-bank memory 330 and multi-bank memory 330 drives a DMA memory grant signal DMA_MG to DMA controller 320. In another embodiment of the present invention, both memory bank 333 and memory bank 336 receive access requests from both CPU 310 and DMA controller 320. Each memory bank can decide which bus master request to respond to first depending on the current state. In still another embodiment of the present invention, CPU 310 and DMA controller 320 have separate request lines for each memory bank.

when CPU 310 is granted use of a memory bank muxing circuit 340 is configured to route the output signals (control signals, address signals, and data signals) from CPU 310 to the input terminals of the memory bank and the output signals (control signals, address signals and data signals) from the memory bank to the input terminals of CPU 310. Muxing circuit 340 is configured similarly when DMA controller 320 is granted use of a memory bank. Specifically, muxing circuit 340 is configured to route the output signals (control signals, address signals, and data signals) from DMA Controller 320 to the input terminals of the memory bank and the output signals (control signals, address signals, and data signals) from the memory bank to the input terminals of DMA controller 320. Muxing circuits are well known in the art and various muxing circuits can be used with the present invention. One skilled in the art can easily create a muxing circuit for use with the present invention.

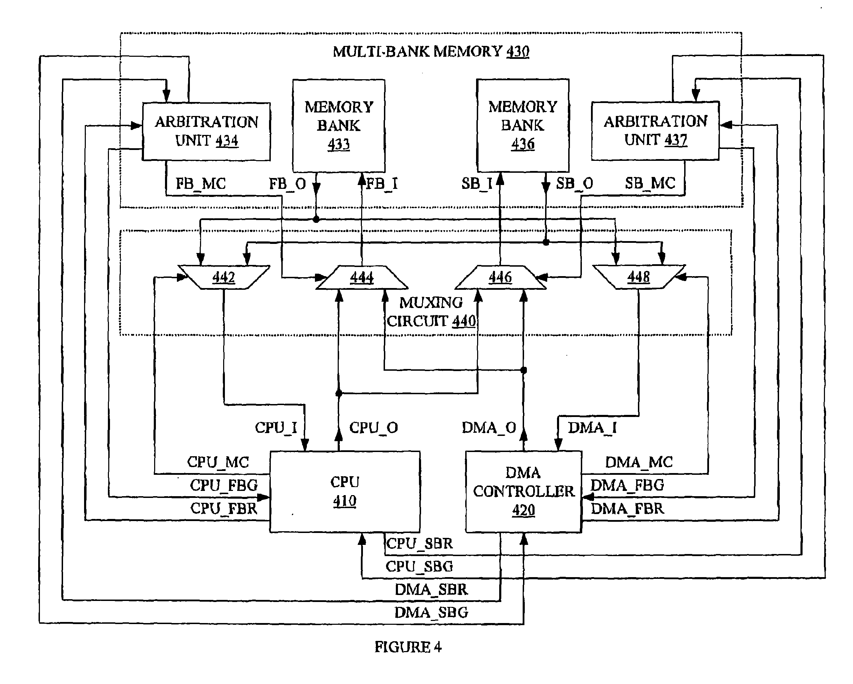

Fig. 4 is a more detailed block diagram of a microprocessor system 400 in accordance with one embodiment of the present invention. Microprocessor system 400 includes CPU 410, DMA controller 420, a muxing circuit 440 and a multi-bank memory 430. Multi-bank memory 430 includes a first memory bank 433, a first arbitration unit 434, a second memory bank 436, and a second arbitration unit 437. Muxing circuit 440 includes a CPU multiplexer 442, a first bank multiplexer 444, a second bank multiplexer 446, and a DMA multiplexer 448. For consistency, the multiplexers are named based on the destination of the output signals of the multiplexers. Furthermore signals are labeled as input or output signals based on memory bank 433, memory bank 436, CPU 410, or DMA controller 420 rather than the multiplexers. Thus, CPU multiplexer 442 receives first bank output signals FB_O (which can include both data and control circuits) from first memory bank 433 and second bank output signals SB_O from second memory bank 433. CPU multiplexer 442 provides output signals, which are referred to as CPU input signals CPU_I, to CPU 410. CPU multiplexer 442 is controlled by a CPU multiplexer control signal CPU_MC from CPU 410. In some embodiments of the present invention, CPU multiplexer control signal CPU_MC is a high bit address line that distinguishes between first memory bank 433 and second memory bank 436. In another embodiment of the present invention, CPU multiplexer control signal CPU_MC is a bank selection bit in a register that is not

DMA multiplexer 448 receives first bank output signals FB_O from first memory bank 433 and second bank output signals SB_O from second memory bank 436. DMA multiplexer 448 provides output signals, which are referred to as DMA input signals DMA_I, to DMA controller 420. DMA multiplexer 448 is controlled by a DMA multiplexer control signal DMA_MC from DMA controller 420. In some embodiments of the present invention, DMA multiplexer control signal DMA_MC is a high bit address line that distinguishes between first memory bank 433 and second memory bank 436. In another embodiment of the present invention, CPU multiplexer control signal DMA_MC is a bank selection bit in a register that is not

First bank multiplexer 444 receives CPU output signals CPU_O (which include data, control and address signals) from CPU 110 and DMA output signals DMA_O (which include data, address, and control signals) from DMA controller 420. First bank multiplexer 444 provides output signals, which are referred to as first bank input signals FB_I, to first memory bank 433. First bank multiplexer 444 is controlled by a first bank multiplexer control signal FB_MC from arbitration unit 434.

Second bank multiplexer 446 receives CPU output signals CPU_O from CPU 110 and DMA output signals DMA_O from DMA controller 420. Second bank multiplexer 446 provides output signals, which are referred to as second bank input signals SB_I, to second memory bank 436. Second bank multiplexer 446 is controlled by a second bank multiplexer control signal SB_MC from arbitration unit 437.

To use first memory bank 433, CPU 410 would drive a CPU first bank request signal CPU_FBR to a request state (e.g., logic high). If first memory bank 433 is available, arbitration unit 434 would drive a CPU first bank grant signal CPU_FBG signal to a grant state (e.g. logic high). If first memory bank 433 is not available, arbitration unit 434 would drive CPU first bank grant signal to a denied state (e.g. logic low). In the embodiment of Fig. 4, even after being granted access to first memory bank 433, CPU 410 holds CPU first bank request signal at the request state while CPU 410 is using first memory bank 433. After CPU 410 is finished with first memory bank 433, CPU 410 drives CPU first bank request signal to a non-requesting state (e.g. logic low) to indicate that CPU 410 no longer needs to use first memory bank 433.

Similarly DMA controller 420 requests and is granted or not granted access to first memory bank 433 using a DMA first bank request signal and a DMA first bank a grant signal. Access to second memory bank 436 is controlled by arbitration unit 437 in a similar fashion. Specifically, arbitration unit 437 interacts with CPU 410 using a CPU second bank request signal CPU_SBR and a CPU second bank grant signal CPU_SBG as described above with respect to arbitration unit 434. Similarly, Arbitration unit 437 interacts with DMA controller 420 using a DMA second bank request signal DMA_SBR and a DMA second bank grant signal CPU_SBG.

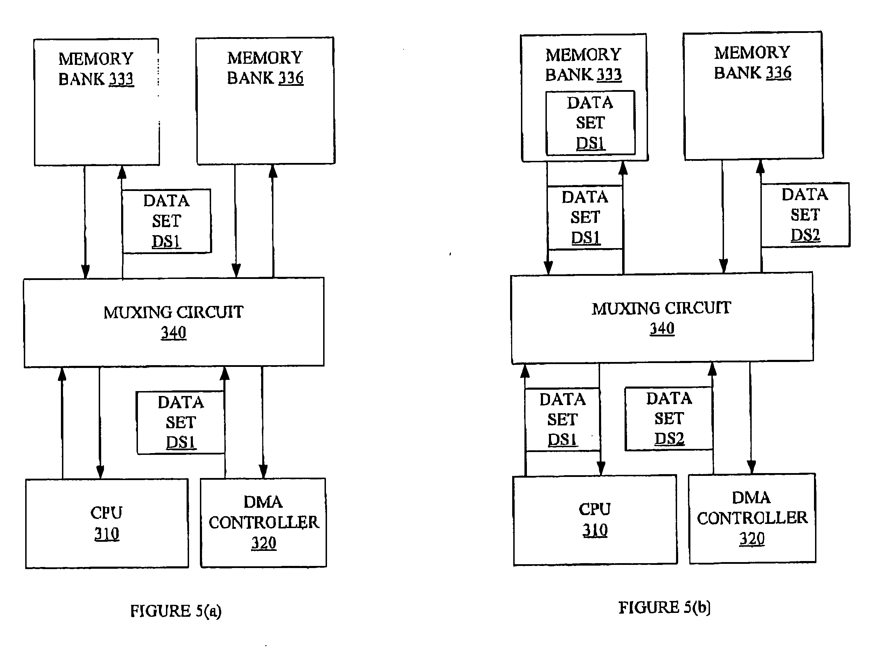

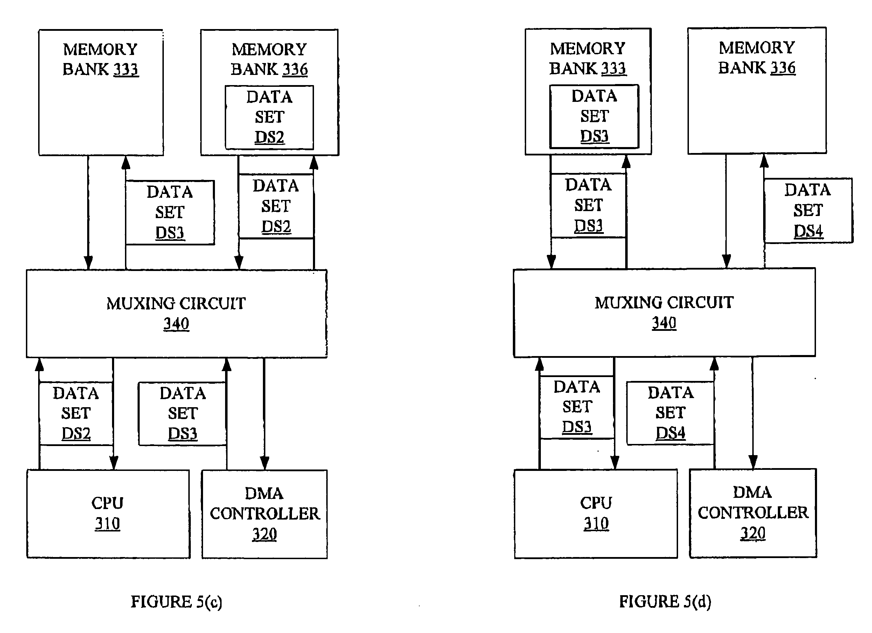

Fig. 5(a)-5(d) illustrate the processing of three data sets DS1, DS2, and DS3 using an embodiment of the present invention. For clarity, Fig. 5(a)-5(f) use a simplified version of microprocessor system 300. As illustrated in Fig. 5(a) the process begins with DMA controller 320 writing data set DS1 into first memory bank 333. Because, CPU 310 has no data to process at this time, CPU 310 remains idle. However, if second memory bank 336 already has data for CPU 310 from previous DMA transfers, CPU 310 could be processing data in second memory bank 336. As illustrated in Fig. 5(b), after data set DS1 is written into first memory bank 333, CPU 310 can process data set DS1. In Fig. 5(b)-5(d), processing of data sets residing in the memory banks by CPU 310 through muxing circuit 340 is symbolically illustrated by a copy of the data set on the busses coupling the memory banks to muxing circuit 340 and the busses coupling CPU 310 to muxing circuit 340. At the same time DMA controller 320 can start writing data set DS2 into second memory bank 336. Thus, DMA controller is not stalled while CPU 310 is processing data set DS1. In Fig. 5(c), after CPU 310 has finished processing data set DS1 and DMA controller 320 has finished writing data set DS2 into second memory bank 336, CPU 310 can process data set DS2 and DMA controller 320 can start writing data set DS3 into first memory bank 333. Then, as illustrated in Fig. 5(d) after CPU 310 has finished processing data set DS2 and DMA controller 320 has finished writing data set DS3 into first memory bank 333, CPU 310 can process data set DS3 and DMA controller 320 can start writing data set DS4 into second memory bank 336. This pattern of alternating memory banks between CPU 310 and DMA controller 320 can continue for additional data sets.

Thus by using two memory banks, embodiments of the present invention allow microprocessor systems to achieve results similar to systems using dual ported memories without the associated costs of dual ported memories. As explained above, dual ported memories typically take up 50% more silicon area than an equivalent single port memory. Furthermore, dual port memories consume almost twice the power of single port memories and require additional hardware to prevent multiple masters from accessing the same memory location at the same time.

In addition to providing performance similar to a dual port memory, the present invention offers many other advantages over conventional microprocessor systems. One advantage of the present invention is that two smaller memory banks consume less power than one large single port memory. Specifically, with smaller memory banks, the loading on the bit-lines and word-lines is smaller and therefore requires less power to pre-charge and discharge. Another advantage provided by the present invention is that each memory bank can have different sizes, speed, and memory cell types. For example, in one embodiment of the present invention the first memory bank is made using fast SRAM memory cells, while the second bank is much larger and is made using slower DRAM memory cells. Slower memories may need to assert wait states to the CPU and DMA controllers so that the overall system speed need not be brought down to the speed of the slower memory bank.

In the various embodiments of this invention, novel structures and methods have been described to provide high utilization of a CPU and DMA controller. By using a multi-bank memory, the CPU of a microprocessor systems in accordance with the present invention can process a data set in a first memory bank while a DMA controller (or other memory access device) reads or writes data in a second memory bank. The various embodiments of the structures and methods of this invention that are described above are illustrative only of the principles of this invention and are not intended to limit the scope of the invention to the particular embodiments described. For example, in view of this disclosure, those skilled in the art can define other memory access devices, CPUs, DMA controllers, arbitration units, arbitration schemes, memory banks, multi-bank memories, muxing circuits, data sets, and so forth, and use these alternative features to create a method or system according to the principles of this invention. Thus, the invention is limited only by the following claims.

## Claims

1. A memory system comprising:
a multi-bank memory having a first memory bank and a second memory bank;
a muxing circuit coupled to the multi-bank memory;
a first memory access device coupled to muxing circuit; and
a second memory access device coupled to the muxing circuit;
wherein the muxing circuit is configurable to couple the first access device to the first memory bank and the second memory bank, and the muxing circuit is configurable to couple the second access device to the first memory bank and the second memory bank.

2. The memory system of Claim 1, wherein the multi-bank memory comprises a third memory bank and wherein the muxing circuit is configurable to couple the first access device to the third memory bank and the muxing circuit is configurable to couple the second access device to the third memory bank.

3. The memory system of Claim 1, further comprising a third memory access device coupled to the muxing circuit and wherein the muxing circuit is configurable to couple the third access device to the first memory bank and the second memory bank.

4. The memory system of Claim 1, wherein the muxing circuit is configured to couple the first access device to the first memory bank and the second access device to the second memory bank so that the first memory access device can access the first memory bank when the second access device is accessing the second memory bank.

5. The memory system of Claim 1, wherein the muxing circuit is configured to couple the second access device to the first memory bank and the first access device to the second memory bank so that the first memory access device can access the first memory bank when the second access device is accessing the second memory bank.

6. The memory system of Claim 1, wherein the first memory bank is larger than the second memory bank.

7. The memory system of Claim 1, wherein the first memory bank operates at a first frequency and the second memory bank operates at a second frequency, wherein the first frequency is greater than the second frequency.

8. The memory system of Claim 1, wherein the first memory bank is of a first memory type and the second memory bank is of a second memory type.

9. The memory system of Claim 8, wherein the first memory type is DRAM and the second memory type is SRAM.

10. The memory system of Claim 1, wherein the first memory access device is a CPU.

11. The memory system of Claim 1, wherein the second memory access device is a DMA controller.

12. A method of processing a plurality of data sets on a memory system having a first memory bank and a second memory bank; the method comprising:
storing a first data set in the first memory bank;
processing the first data set;
storing a second data set in the second memory bank;
processing the second data set; and
storing a third data set in the first memory bank.

13. The method of Claim 12 wherein the processing the first data set and the storing a second data set in the second memory bank occurs simultaneously.

14. The method of Claim 12, further comprising processing the third data set in the first memory bank.

15. The method of Claim 12, further comprising requesting use of the first memory bank for a first memory access device before the storing a first data set in the first memory bank.

16. The method of Claim 15, further comprising requesting use of the first memory bank for a second memory access device before the processing the first data set.

17. The method of Claim 16, further comprising stalling the second memory access device until after the first data set is stored in the first memory bank.

18. The method of Claim 17, further comprising requesting the first memory bank for the first memory access device before storing a third data set in the first memory bank.

19. The method of Claim 18, further comprising stalling the first memory access device until after the first data set is processed.

20. The method of Claim 12, wherein the first data set, the second data set, and the third data set are stored by a first memory access device.

21. The method of Claim 20, wherein the first data set and the second data set are processed by a second memory access device.

22. The method of Claim 21, wherein the first memory access device is a DMA controller and the second memory access device is a CPU.

23. The method of Claim 12, wherein the memory system has a third memory bank and further comprising storing a fourth data set in the third memory bank.

24. The method of Claim 12, wherein the first data set is stored by a first memory access device.

25. The method of Claim 24, wherein the first data set is processed by a second memory access device.

26. The method of Claim 25, wherein second data set is stored by a third memory access device.

27. A memory system for processing a plurality of data sets comprising:
a first memory bank;
a second memory bank;
means for storing a first data set in the first memory bank;
means for processing the first data set;
means for storing a second data set in the second memory bank;
means for processing the second data set; and
means for storing a third data set in the first memory bank.

28. The memory system of Claim 27, further means for comprising processing the third data set in the first memory bank.

29. The memory system of Claim 27, further comprising means for requesting use of the first memory bank for a first memory access device.

30. The memory system of Claim 29, further comprising means for requesting use of the first memory bank for a second memory access device.

31. The memory system of Claim 30, further comprising means for stalling the second memory access device.

32. The memory system of Claim 27, wherein the first data set, the second data set, and the third data set are stored by a first memory access device.

33. The memory system of Claim 32, wherein the first data set and the second data set are processed by a second memory access device.

34. The memory system of Claim 33, wherein the first memory access device is a DMA controller and the second memory access device is a CPU.
